# EUROPÄISCHE PATENTSCHRIFT

(11) **EP 2 108 928 B1**
(45) Veröffentlichungstag und Bekanntmachung des Hinweises auf die Patenterteilung: **05.05.2021**
(21) Anmeldenummer: 09153288.7
(22) Anmeldetag: 20.02.2009
(51) Int. Cl.: G01H 1/00, B29C 49/56, B29C 33/26, B29C 49/06, B29C 49/36, B29C 49/78, B67B 3/26, B67C 3/00, B29C 49/48

(54) **Vorrichtung und Verfahren zum Überwachen der Betriebsfähigkeit einer Behälterbehandlungsvorrichtung**
Device and procedure to monitor the operability of a container treatment device
Dispositif et procédé de surveillance de la capacité de fonctionnement d'un dispositif de traitement de récipients

(30) Priorität: 25.02.2008 DE 102008010885
(43) Veröffentlichungstag der Anmeldung: 14.10.2009
(73) Patentinhaber: Krones AG, 93073 Neutraubling (DE)
(72) Erfinder: Finger, Dieter, D-93073 Neutraubling (DE)
(74) Vertreter: Bittner, Bernhard

(56) Entgegenhaltungen:
- DE-A1- 3 408 659
- DE-A1- 4 116 345
- DE-B3-102006 033 421
- US-A- 5 895 857
- US-B1- 6 416 308

## Beschreibung

Die Erfindung betrifft eine Vorrichtung zum Ausführen einer kurvengesteuerten mechanischen Bewegung, im Folgenden Bewegungsausführungsvorrichtung genannt, und insbesondere eine Behälterbehandlungsvorrichtung mit einer Bewegungsausführungsvorrichtung nach dem Oberbegriff des Patentanspruches 1 sowie ein Verfahren zum Überwachen der Betriebsfähigkeit einer Behälterbehandlungsvorrichtung mit einer Bewegungsausführungsvorrichtung nach dem Oberbegriff des Anspruchs 8.

Behälterbehandlungsvorrichtung wird im Folgenden als Sammelbegriff für Vorrichtungen zum Herstellen von Behältern, insbesondere zum Blasformen von Behältern, Vorrichtungen zum Etikettieren von Behältern, Vorrichtungen zum Füllen von Behältern, Vorrichtungen zum Verschließen von Behältern und weitere Vorrichtungen, die Verarbeitungsschritte bei der Herstellung oder Befüllung von Behältern ausführen, sowie Kombinationen aus diesen verwendet

Verschiedene Behälterbehandlungsvorrichtungen sind aus dem Stand der Technik bekannt. So offenbart die US 6 416 308 eine Behälterbehandlungsvorrichtung zur Behandlung von Behältern wobei ein Mikrofon akustische Schwingungen zur Überwachung eines Blasprozesses aufnimmt Die US 5 895 857, DE 34 08 659, DE 41 16 345 offenbaren jeweils ein System zur Schwingungsanalyse von beweglichen Teilen von Maschinen. Bei dem Schwingungsaufnehmer handelt es sich um ein Mikrofon. Die DE 10 2006 033421 offenbart ein System zur Überwachung von Spritzgießmaschinen mit an beweglichen Teilen der Maschine angebrachten mechanischen Schwingungssensoren.

Im Folgenden wird eine Vorrichtung zum Herstellen von Behältern durch Blasformung lediglich als ein Beispiel für eine Behälterbehandlungsvorrichtung, in der die vorliegende Erfindung eingesetzt wird, beschrieben. Blasformungsvorrichtungen bzw. das Verfahren zum Herstellen von Behältern durch Blasformung sind allgemein bekannt. Dabei werden zunächst thermoplastische Vorformlinge, z.B. aus Polyethylenterephtalat (PET) in einer der

Blasformungsvorrichtung vorgeschalteten Heizstation derart aufgeheizt, dass sie anschließend in der Blasformungsvorrichtung in einer Blasform durch Blasformung bzw. durch Streckblasen verformt werden können, um den Vorformling so in eine gewünschte Behälterform umzuformen. In der Heizstation werden die Vorformlinge beispielsweise auf einer Gliederkette mit Aufnahmedornen befördert. Die erwärmten Vorformlinge werden dann mit Hilfe einer Übergabevorrichtung mit einem Übergabestern in die eigentliche Blasform in der Blasformvorrichtung überführt. Eine Blasform besteht aus zwei auseinander klappbaren Formhälften und einem Formboden, in denen jeweils Aussparungen, die der Form eines entsprechenden Teils der äußeren Oberfläche des herzustellenden Behälters entsprechen, ausgebildet sind.

Nach dem ein Vorformling der aufgeklappten Blasform zugeführt worden ist, wird die Blasform geschlossen und auf einem äußeren Umfang eines sich kontinuierlich drehenden Blasrads in der Blasformvorrichtung transportiert, wobei der Behälter in der Blasform durch Blasformen bzw. durch Streckblasen erzeugt wird. Auf dem Umfang des Blasrads ist eine Vielzahl von Blasformen verteilt angeordnet. An einem Ausgang der Blasformvorrichtung öffnet sich die Blasform und der geformte Behälter wird über eine Ausgabevorrichtung mit einem Ausgabestern einer Behälterausgabe und dann weiter in z.B. eine Behältersammelvorrichtung oder auf ein Behältertransportband zum Weitertransport zu nachgeschalteten Behälterbehandlungsvorrichtungen, wie z.B. einer Befüllungs- und/oder einer Etikettiervorrichtung.

Um die Herstellungskapazität der Blasformvorrichtung zu erhöhen, wird die Zeit, die für die Zuführung der Vorformlinge und die Entnahme der geformten Behälter benötigt wird, soweit wie möglich reduziert. Gleichzeitig müssen die Blasformen hohen Drücken standhalten, weshalb sie sehr stabil ausgeführt werden und damit schwer sind. Zum Ausführen von Bewegungen der Blasform, insbesondere dem Schließen und Öffnen der Blasformhälften und dem Heben und Senken eines beweglichen Blasformbodens, sind hohe Kräfte und gleichzeitig eine sehr genau Führung der Blasformteile erforderlich. Dazu werden häufig Vorrichtungen zum Ausführen einer kurvengesteuerten mechanischen Bewegung eingesetzt, die im folgenden Bewegungsausführungsvorrichtungen oder kurz "mechanische Kurven" genannt werden, eingesetzt.

In einer Blasformvorrichtung kommen beispielsweise mechanische Kurven zum Entriegeln der Blasform, zum Öffnen der Blasform, zum Schließen und zum Verriegeln der Blasform sowie mechanische Kurven zum Absenken und Anheben der Blasformböden und eine mechanische Kurve zum Strecken der Vorformlinge mit Hilfe einer Reckstange zum Einsatz. Alle diese mechanischen Kurven bzw. Bewegungsausführungsvorrichtungen führen eine kurvengesteuerte mechanische Bewegung von teilweise schweren Vorrichtungsteilen aus. Zur Erhöhung der Verarbeitungs- bzw. Herstellungskapazität von Behältern werden die Leistungen von Behälterbearbeitungsvorrichtungen immer weiter gesteigert. Daher nimmt auch die Belastung dieser Maschinen und hierbei vor allem die mechanische Belastung der Formen und der mechanischen Kurven immer weiter zu. Daher ist es äußerst wichtig, dass diese Maschinen und insbesondere die Bewegungsausführungsvorrichtungen (mechanischen Kurven) regelmäßig und sorgfältig gewartet werden und präzise eingestellt sind.

Beim Betrieb von Behälterbehandlungsvorrichtungen (mechanischen Kurven) treten beispielsweise folgende Probleme auf. In Blasformungsvorrichtungen werden der Blasform häufig Vorformlinge von geringerer Qualität zugeführt. Derartige Vorformlinge zeichnen sich beispielsweise durch beschädigte Tragringe oder nicht runde, z.B. ovale Mündungsöffnungen, aus. Solche Vorformlinge von geringer Qualität können im Betrieb der Blasformvorrichtung zu Problemen führen, wenn derartige Vorformlinge z.B. schräg in die Blasform eingesetzt werden und die Blasformhälften nicht oder nicht vollständig geschlossen werden können. In Behälterverschließvorrichtungen kann es vorkommen, dass ein Verschluss von geringer Qualität der Behälteröffnung, z.B. mit nicht exakter Soll-Form oder zeitverzögert oder in einer schrägen Position, zugeführt wird, so dass das feste Verbinden des Verschlusses mit der Behälteröffnung von der diesen Vorgang steuernden mechanischen Kurve nicht gemäß den Soll-Bewegungen ausgeführt wird.

Eine Behälterbehandlungsvorrichtung wird deshalb so konstruiert, dass zugeführte Teile von geringerer Qualität nicht zur Zerstörung von Vorrichtungsbestandteilen, insbesondere den Bewegungsausführungsvorrichtungen, führen kann. Die Bewegungsausführungsvorrichtung kann beispielsweise gefedert montiert werden und bei einer Überlastung zurückschwenken. Trotzdem kann eine Häufung von extremen Belastungen, wie sie bei der Zuführung von Teilen mit geringerer Qualität auftreten, zu einer Verstellung der mechanischen Komponenten, insbesondere von Komponenten der mechanischen Kurve führen. Um so wichtiger ist es, dass die Behälterbehandlungsvorrichtung mit den Bewegungsausführungsvorrichtungen regelmäßig überprüft und gewartet wird.

Ein weiteres Problem ist der Druck auf die Maschinenbetreiber, die Herstellungskapazität von Behältern zu maximieren. Dies führt häufig dazu, dass Wartungsintervalle nicht eingehalten werden. In der Folge können sich kleine Verstellungen der mechanischen Komponenten einschließlich der mechanischen Kurven vergrößern oder kleine Schäden weiter verschlechtern und so auf Dauer zur Zerstörung der Maschine führen.

Der vorliegenden Erfindung liegt daher die Aufgabe zugrunde, besondere Belastungen der Bewegungsausführungsvorrichtungen bzw. der mechanischen Kurven in einem Frühstadium zu erkennen und Verstellungen bzw. Beschädigungen ebenfalls in einem frühen Stadium zu detektieren. Eine weitere Aufgabe ist es, in Abhängigkeit von der Größe einer Verstellung bzw. der Schwere einer Beschädigung einen Hinweis auf erforderliche Wartungsarbeiten zu erzeugen oder gar automatisch eine Stillsetzung der Behälterbehandlungsvorrichtung herbei zu führen, um die Behälterbehandlungsvorrichtung, bzw. insbesondere die Bewegungsausführungsvorrichtungen vor Zerstörungen zu schützen bzw. den Maschinenbediener durch Stillsetzung zu zwingen, erforderliche Wartungsarbeiten durchzuführen.

Die Aufgabe wird gelöst durch eine Behälterbehandlungsvorrichtung nach Anspruch 1 und ein Verfahren nach Anspruch 8. Vorteilhafte Ausführungsformen sind in den abhängigen Ansprüchen angegeben.

Eine Behälterbehandlungsvorrichtung zur Behandlung von Behältern umfasst mindestens eine oder eine Vielzahl von Bewegungsausführungsvorrichtungen, d. h. Vorrichtungen zum Ausführen einer kurvengesteuerten, mechanischen Bewegung (mechanische Kurve).

Erfindungsgemäß umfasst die Behälterbehandlungsvorrichtung mindestens einen in Schwingungskommunikation mit der Bewegungsausführungsvorrichtung angeordneten Schwingungssensor zum Umwandeln einer mechanischen Schwingung von zumindest einem Teilbereich der Bewegungsausführungsvorrichtung in ein Schwingungsmesssignal und zum Ausgeben des Schwingungsmesssignals, und ferner ein Auswertmittel, das zum Auswerten von mindestens einem durch den Schwingungssensor erzeugten Schwingungsmesssignal ausgebildet ist. Ein Vorteil der erfindungsgemäßen Behälterbehandlungsvorrichtung ist, dass mindestens ein Schwingungssensor an einer sensiblen mechanischen Komponente, wie der Bewegungsausführungsvorrichtung, angebracht ist und dass durch die Messung von Schwingungen von Teilen oder Teilbereichen der Bewegungsausführungsvorrichtung empfindlich und frühzeitig auch kleine Verstellungen der mechanischen Kurve oder auch verstellte rotierende Bestandteile durch Änderungen im Schwingungsverhalten der betroffenen Teilbereiche der Bewegungsausführung detektiert werden können.

Die erfindungsgemäße Vorrichtung nutzt so die an sich bekannten Effekte, dass eine verstellte mechanische Kurve oder verstellte rotierende Bestandteile in der Vorrichtung dazu führen können, dass geführte Teile oder rotierende Teile weniger sanft in die mechanische Kurve einfahren können, entlang der führenden Kurve schleifen können oder auch zu Stößen mit der führenden Kurve führen können. Ebenso ist bekannt, dass Unwuchten in schnell drehenden Wellen zu Vibrationen führen. Die Einflüsse dieser Effekte auf die mechanische Schwingung von zumindest einem Teilbereich der Bewegungsausführungsvorrichtung wird durch die erfindungsgemäß angeordneten Schwingungssensoren empfindlich und zuverlässig gemessen. Je nach Art der zu erwartenden Belastung oder Störung oder Beschädigung wird ein geeignetes Auswertungsverfahren für das Schwingungsmesssignal ausgewählt, so dass Abweichungen vom Schwingungsverhalten einer gut gewarteten, betriebsfähigen Bewegungsausführungsvorrichtung frühzeitig, zuverlässig und deutlich detektiert werden können.

In vorteilhafter Weise ist das Auswertemittel dazu ausgebildet, dass basiert auf einem Ergebnis des Auswertens des Schwingungsmesssignals erkannt wird, ob ein Wartungsbedarf besteht, oder ob eine mechanische Verstellung, ein Schaden und/oder eine zu hohe Belastung an einer mechanischen Komponente der Bewegungsausführungsvorrichtung aufgetreten ist. Das automatische Detektieren durch das Auswertemittel stellt einen zuverlässigeren Schutz der Bewegungsausführungsvorrichtung und insgesamt der Behälterbehandlungsvorrichtung dar als die Überwachung der Einhaltung von Wartungsintervallen durch die Maschinenbediener. Insbesondere kann ein Wartungsbedarf bzw. eine Verstellung oder ein Schaden, eine zu hohe Belastung auch innerhalb eines Wartungsintervalls frühzeitig erkannt werden.

Die Bewegungsausführungsvorrichtung kann aus einer Gruppe von Vorrichtungen ausgewählt sein, welche eine Vorrichtung zum Führen einer Blasform während der Blasformung eines Behälters, eine Vorrichtung zum Öffnen und/oder Schließen einer Blasform, beispielsweise zum Bewegen einer Blasformhälfte in Richtung zu einer anderen Blasformhälfte und/oder in entgegen gesetzter Richtung, eine Vorrichtung zum Verriegeln der Blasformhälften, eine Vorrichtung zum Entriegeln der Blasformhälften, eine Vorrichtung zum Heben und Senken eines Blasformbodens, eine Vorrichtung zum Strecken eines Vorformlings, z. B. zum Führen einer Reckstange, Kombinationen hieraus oder dergleichen umfasst. Die vorliegende Erfindung kann auf alle möglichen sensiblen, auf präzise mechanische Führung angewiesenen Teile einer Blasformungsvorrichtung angewendet werden.

Die Bewegungsausführungsvorrichtung kann eine führende Komponente und/oder eine geführte Komponente umfassen. Die führende Komponente umfasst insbesondere das Formteil mit der mechanisch ausgebildeten Kurvenform. Die geführte Komponente umfasst das Teil, das von der mechanisch ausgebildeten Kurvenform exakt entlang der Form der Kurve geführt wird. Beispielsweise kann in einer Blasformungsvorrichtung die Blasform während des Transports entlang einer im Wesentlichen kreisförmigen Führungskurve geführt werden, wobei die Blasform die geführte Komponente und die Führungskurve die führende Komponente darstellt.

Vorzugsweise ist der mindestens eine Schwingungssensor in Schwingungskommunikation mit der führenden Komponente angeordnet. Häufig ist die führende Komponente z.B. ruhiger oder stillstehend gelagert, so dass sich Störungen im Betrieb durch Verstellung oder Beschädigungen an der mechanischen Kurve deutlicher im Schwingungsverhalten bzw. im Schwingungsmesssignal der führenden Komponente vom Normalzustand abheben als das für die geführten Komponenten der Fall ist. Die führende Komponente kann ein Hauptgestell der Behälterbehandlungsvorrichtung umfassen.

Das Hauptgestell der Behälterbehandlungsvorrichtung kann nämlich bei geeigneter Konstruktion insbesondere bei geeigneter Kopplung mit den Bewegungsausführungsvorrichtungen Schwingungsänderungen durch Verstellung oder Beschädigung einer jeglichen Bewegungsausführungsvorrichtung für einen mit dem Hauptgestell in Schwingungskommunikation angebrachten Schwingungssensor erkennbar machen, so dass ein Schwingungssensor zur Überwachung mehrerer Bewegungsausführungsvorrichtungen eingesetzt werden kann.

Der mindestens eine Schwingungssensor kann auch in Schwingungskommunikation mit einer geführten Komponente angeordnet sein. Je nach Art der mechanischen Kurve und Ausgestaltung der geführten Komponente kann auch ein derartiges Anbringen des Schwingungssensors Änderungen im Schwingungsverhalten der Bewegungsausführungsvorrichtung direkter bzw. empfindlicher detektieren als beim Anbringen an dem führenden Element.

Das Auswertemittel kann dazu ausgebildet sein, zu erkennen, wenn, basiert auf der Auswertung des Schwingungsmesssignals, ein Bedarf zum Eingreifen durch einen Bediener in den laufenden Betrieb der Behälterbehandlungsvorrichtung detektiert wird. Das automatische Erkennen eines Bedarfs zum Eingreifen in Folge kontinuierlicher Überwachung des Schwingungsverhaltens der Bewegungsausführungsvorrichtung ermöglicht eine zuverlässigere Überwachung des Betriebs der Behälterbehandlungsvorrichtung als die Überwachung der Behälterbehandlungsvorrichtung durch Bedienpersonal.

In vorteilhafter Weise ist das Auswertemittel dazu ausgebildet, ein Signal zu erzeugen, das die Stilllegung der Behälterbehandlungsvorrichtung bewirkt. So kann, im Beispiel einer frühzeitig detektierten kleinen Beschädigung, die Behälterbehandlungsvorrichtung wirksam vor einem größeren Schaden geschützt werden.

Das Auswertemittel kann dazu ausgebildet sein, ein für eine Amplitude einer Schwingung von zumindest einem Teil der Bewegungsausführungsvorrichtung repräsentatives Signal mit einem oder mehreren einstellbaren Grenzwerten für das Signal zu vergleichen. Das für die Schwingung repräsentative Signal kann das im Zeitbereich gemessene Schwingungsmesssignal bzw. die Zeitabhängigkeit der Schwingungsamplitude sein, oder ein durch Mittelwertbildung in der Zeit, Tiefpassfilterung oder Bandpassfilterung abgeleitetes Signal, sein. Der Grenzwert kann ein Grenzwert für die Amplitude im Zeitbereich sein, oder ein Grenzwert für einen Mittelwert, ein Grenzwert für einen tiefpassgefilterten oder einen bandpassgefilterten Wert sein.

Aus einem Schwingungsmesssignal kann auch, je nach Signalform, durch Detektieren einer Flanke bzw. eines steilen Anstiegs oder Abfalls des Schwingungsmesssignals ein Zeitpunkt dieser Flanke bzw. des Anstiegs oder des Abfalls oder ein Zeitpunkt in Bezug auf eine Referenzzeit bestimmt werden. Dieser Zeitpunkt bzw. dessen Zeitabweichung von einem Referenzzeitpunkt kann mit einem entsprechenden Zeitgrenzwert verglichen werden. Eine derartige Auswertung ist beispielsweise dann nützlich, wenn eine geführte Komponente der Bewegungsausführungsvorrichtung bis zu einem Anschlag der führenden Kurve geführt wird, wobei sich die Position des Anschlags und damit die Führungszeitdauer der geführten Komponente durch Verstellung oder Beschädigung geändert hat.

Das Auswertemittel kann auch dazu ausgebildet sein, das Schwingungsmesssignal in Frequenzbänder zu zerlegen und Frequenzbestandteile des so zerlegten Schwingungsmesssignals in geeignet ausgewählten Frequenzbändern zu bewerten. Durch eine derartige Auswertung im Frequenzbereich kann gezielt eine mechanische Resonanz bzw. deren Änderungen als Indikator für Verstellungen oder Beschädigungen herangezogen werden. Alternativ können auch gezielt Frequenzbestandteile außerhalb von das Frequenzspektrum möglicherweise dominierenden mechanischen Resonanzen als Indikator zum Erkennen von Verstellungen oder Beschädigungen herangezogen werden. Vorzugsweise erfolgt die Bewertung eines Frequenzbestandteils in "kritischen" bzw. indikativen Frequenzbändern, in denen beispielsweise eine mechanische Resonanz oder ein für eine Verstellung oder einen Schaden der Bewegungsausführungsvorrichtung indikativer Frequenzbestandteil auftritt. Alternativ kann die Bewertung eines Frequenzbestandteils gerade außerhalb eines derartigen kritischen bzw. indikativen Frequenzbandes erfolgen. So könnten beispielsweise Frequenzbänder zur Bewertung herangezogen werden, in denen Frequenzkomponenten aufgrund einer erhöhten Reibung, eines Schleifens oder Kratzens oder auch eines Stoßes zwischen geführten und führenden Komponenten der Bewegungsausführungsvorrichtung verursacht worden sind.

Allgemein kann das Auswertemittel auch dazu ausgebildet sein, zusätzliche Informationen über eine vermeintliche Ursache, beispielsweise eine Verstellung, einen Stoß, eine Beschädigung oder einen Schmiermittelbedarf, oder auch eine Angabe über eine bestimmte verstellte oder beschädigte mechanische Komponente, beispielsweise die Nummer einer betroffenen Komponente aus einer Vielzahl von im Wesentlichen baugleichen Komponenten, wie z.B. die Nummer einer betroffenen Blasform aus einer Vielzahl von Blasformen, zu erzeugen. Dadurch erhält das Bedienpersonal gezielte Hinweise für die Durchführung der Wartung bzw. einer erforderlichen Reparatur.

In der Behälterbehandlungsvorrichtung kann auch ein Anzeigemittel vorgesehen sein. Das Anzeigemittel kann zum Ausgeben von abgeleiteten numerischen Werten bezüglich des Schwingungsmesssignals oder einer grafischen Darstellung des Schwingungsmesssignals oder zum Anzeigen von Ergebnissen der Auswertung des Schwingungsmesssignals benutzt werden. Das Anzeigemittel kann beispielsweise ein Computermonitor sein.

Das Auswertemittel kann direkt in einem Schwingungssensor integriert angeordnet sein. Derartige "intelligente" Schwingungssensoreinheiten können eine zentrale Auswerteeinheit oder eine zentrale Steuereinheit der Behälterbehandlungsvorrichtung dadurch entlasten, dass sie die teilweise z.B. rechenintensive Auswertung in die Schwingungssensoreinheit selbst vornehmen. Das Auswertemittel gibt dann beispielsweise einer übergeordneten Vorrichtungssteuereinheit Information darüber, wie z.B. auf eine zu hohe Belastung der betreffenden Bewegungsausführungsvorrichtung, zu reagieren ist.

Alternativ kann eine zentrale Auswerteeinheit vorgesehen werden, der die Schwingungsmesssignale von einem oder mehreren Schwingungssensoren zuführbar sind oder zugeführt werden. Die zentrale Auswerteeinheit umfasst dann mindestens ein Auswertemittel zum Auswerten des Schwingungssignals des mindestens eines Schwingungssensors oder mehrere, einem jeweiligen Schwingungssensor zugeordnete Auswertemittel.

In einer noch alternativen Ausführungsform kann die zentrale Auswerteeinheit auch in einer übergeordneten zentralen Steuereinheit zum Steuern der Behälterbehandlungsvorrichtung integriert sein. Die vollständige Integration der Auswertemittel in einer zentralen Steuereinheit kann ein genaueres Auswerten, eine gezieltere Anpassung der Ausgabe der Auswertung, oder der zu ergreifenden Maßnahmen bzw. Eingriffe in den Betriebsablauf ermöglichen.

Zur Lösung der Aufgabe der Erfindung wird ferner ein Verfahren zum Überwachen der Betriebsfähigkeit einer Behälterbehandlungsvorrichtung mit mindestens einer Bewegungsausführungsvorrichtung und mindestens einem in Schwingungskommunikation mit der Bewegungsausführungsvorrichtung angeordneten Schwingungssensor bereit gestellt. Erfindungsgemäß umfasst das Verfahren die folgenden Schritte: a) Erfassen von mindestens einem von mindestens einem Schwingungssensor ausgegebenen Schwingungsmesssignal, und b) Auswerten des mindestens einen Schwingungsmesssignals.

Der Schritt b) des Verfahrens kann das Vergleichen des Schwingungsmesssignals mit Normsignalen bzw. Normgrößen und das Feststellen, ob Abweichungen außerhalb eines einstellbaren Toleranzbereichs um das Normsignal bzw. die Normgrößen auftreten, umfassen. Dadurch, dass der Toleranzbereich einstellbar ist, lässt sich die Empfindlichkeit oder auch die Genauigkeit des Detektierens, ob ein Bedarf zum Eingreifen durch einen Bediener in einen laufenden Betrieb der Behälterbehandlungsvorrichtung besteht, einstellen.

Das Verfahren kann ferner einen Schritt c) umfassen, dass basiert auf der Auswertung des Schwingungsmesssignals eine Information, die angibt, dass ein Bedarf zum Eingreifen eines Bedieners in einen laufenden Betrieb der Behälterbehandlungsvorrichtung besteht, ausgegeben wird. So kann einem Bediener unabhängig von festen Wartungsintervallen ein Hinweis auf einen Wartungsbedarf erteilt werden und ihm gleichzeitig die Freiheit überlassen werden, zu entscheiden, ob eine Wartung sofort ausgeführt und dabei der Betrieb der Vorrichtung unterbrochen wird, oder ob die Wartung erst später ausgeführt wird.

Der Schritt c) kann das Erzeugen eines Signals, das die Stilllegung der Maschine bewirkt, umfassen. So kann ein Schutz der häufig teuren Behälterbehandlungsvorrichtungen unabhängig von der Einsatzbereitschaft von Bedien- oder Überwachungspersonal erzielt werden.

Der Schritt c) kann auch das Vergleichen eines für die Amplitude einer Schwingung von zumindest einem Teil der Bewegungsausführungsvorrichtung repräsentativen Signals bzw. einer daraus abgeleiteten Größe mit einem oder mehreren einstellbaren Grenzsignalen bzw. Grenzgrößen umfassen. Der Vergleich kann einen Vergleich eines Amplitudensignals mit einem Amplitudengrenzwert und/oder den Vergleich einer Zeitposition mit einem Zeitpositionsgrenzwert umfassen. So lassen sich verschiedene Merkmale des Amplitudensignals auswerten und die Auswertung kann an die spezifische Konstruktion der Bewegungsausführungsvorrichtung und die darin zu erwartenden Verstellungen bzw. Beschädigungen angepasst werden, um ein zuverlässiges Detektieren dieser Verstellungen oder Beschädigungen zu gewährleisten.

Schritt c) kann auch das Zerlegen des Schwingungsmesssignals in Frequenzbestandteile und Bewerten von Frequenzbestandteilen in geeigneten ausgewählten Frequenzbändern umfassen. Die Bewertung kann dann in "kritischen" bzw. indikativen Frequenzbändern erfolgen, beispielsweise in einem Frequenzband, in dem eine mechanische Resonanz auftritt, oder in einem Frequenzband, in dem ein für eine Verstellung oder einen Schaden der Bewegungsausführungsvorrichtung indikativer Frequenzbestandteil auftritt. Alternativ kann die Bewertung im Frequenzbereich gerade außerhalb von für den Betrieb innerhalb der Toleranzgrenzen indikativen Frequenzbändern, z.B. außerhalb von Frequenzbändern, in denen im Soll-Betrieb mechanische Resonanzen auftreten, erfolgen, um so Schwingungs-"Geräusche" zu detektieren, die beispielsweise durch erhöhte Reibung, durch Schleifen oder Kratzen zwischen mechanischen Komponenten der Bewegungsausführungsvorrichtung verursacht werden.

Schritt c) kann auch das Erzeugen von zusätzlicher Information über eine vermeintliche Ursache oder eine Angabe über eine verstellte oder beschädigte mechanische Komponente der Bewegungsausführungsvorrichtung umfassen. Die Information über eine vermeintliche Ursache kann beispielsweise eine Information darüber sein, ob es sich um eine Verstellung oder eine Beschädigung oder einen Schmierungsbedarf der Bewegungsausführungsvorrichtung handelt. Die Angabe über eine bestimmte verstellte oder beschädigte mechanische Komponente kann beispielsweise eine Nummer einer betroffenen Komponente aus einer Vielzahl von im Wesentlichen baugleichen Komponenten, wie etwa die Nummer einer Blasform aus einer Vielzahl von Blasformen sein.

Weitere vorteilhafte Ausführungsformen ergeben sich aus den beigefügten Zeichnungen.

Darin zeigen:
- Fig. 1: eine Ansicht einer Blasformungsvorrichtung;
- Fig. 2: eine Vorrichtung zum Führen eines Recksystems während der Blasformung eines Behälters in der in Fig. 1 gezeigten Blasformungsvorrichtung;
- Fig. 3: eine Vorrichtung zum Verriegeln einer Blasform, die in der in Fig. 1 gezeigten Vorrichtung eingesetzt wird;
- Fig. 4: eine Vorrichtung zum Öffnen und/oder Schließen einer Blasform, die in der in Fig. 1 gezeigten Vorrichtung eingesetzt wird;
- Fig. 5: eine Vorrichtung zum Entriegeln von Blasformhälften, die in der in Fig. 1 gezeigten Vorrichtung eingesetzt wird;
- Fig. 6a - 6d: alternative Ausführungsformen der Anordnung von Auswertemitteln in Bezug auf Schwingungssensoren und der Kopplung mit einer zentralen Auswerteeinheit; und
- Fig. 7a - 7c: Darstellungen zur Auswertung eines Schwingungsmesssignals.

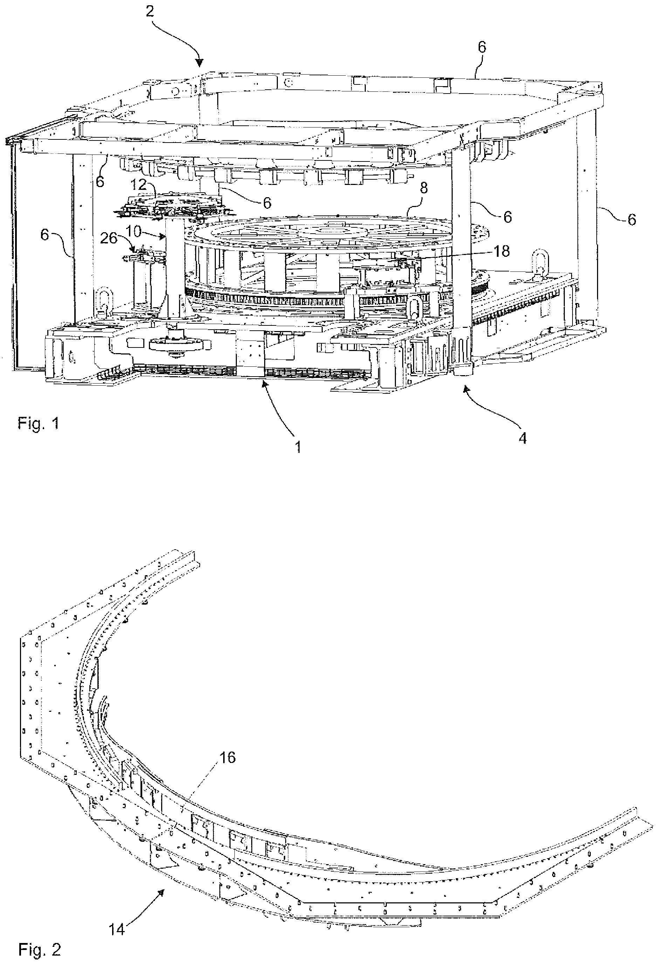

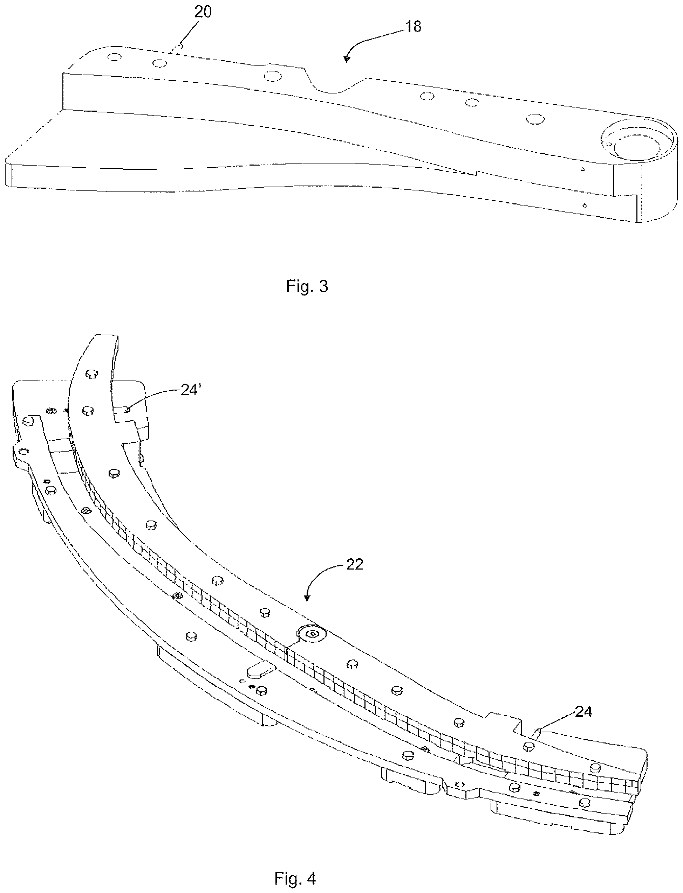

Fig. 1 zeigt als Beispiel für eine Behälterbehandlungsvorrichtung 1 eine Ansicht einer Blasformungsvorrichtung 2, die folgendes umfasst: ein Hauptgestell 4 mit einer Vielzahl von Hauptgestellelementen 6, eine Zuführungsvorrichtung (nicht gezeigt) mit einem Zuführungsstern (nicht gezeigt) zum Zuführen von Vorformlingen für den in der Blasformvorrichtung auszubildenden Behälter aus einer der Blasformvorrichtung vorgeschalteten Vorrichtung zum Erwärmen von Vorformlingen (nicht gezeigt), ein Blasrad zum Transportieren einer Vielzahl von Blasformen (nicht gezeigt), eine Abtransportvorrichtung 10 mit einem Auslaufstern 12 zum Ausführen von Vorformlingen aus der Blasformungsvorrichtung z.B. in nachfolgend angeordnete Behälterbehandlungsvorrichtungen, wie etwa Befüllungs-, Verschließ- und/oder Etikettiervorrichtungen, eine Führungskurve 14 (vgl. Fig. 2), eine Verriegelungskurve 18, eine Öffnungs-/Schließkurve (22, siehe Fig. 4) und eine Entriegelungsvorrichtung.

Im Betrieb werden Vorformlinge mittels des Zurührungssterns (nicht gezeigt) in die Blasformungsvorrichtung 2 eingeführt und in eine vom Blasrad angeführte Blasform übergeben. Die Blasform ist im Augenblick der Übergabe vollständig geöffnet und wird entlang einer Kreisbahn auf dem sich drehenden Blasrad transportiert. Dabei bewegt sich die Blasform an dem Zuführungsstern (nicht gezeigt) vorbei und nimmt dabei einen vom Zuführungsstern (nicht gezeigt) herangeführten Vorformling auf. Auf dem Blasrad werden Blasformen, die über den Umfang des Blasrads 8 verteilt sind, kontinuierlich auf einer Kreisbahn entlang verschiedener Verarbeitungs- bzw. Prozessstationen bis zu einer Abführungsvorrichtung geführt.

Nachdem eine geöffnete Blasform einen Vorformling aufgenommen hat, wird die Blasform auf dem sich in Fig. 1 im Gegenuhrzeigersinn drehenden Blasrad 8 an einer Öffnungs-/Schließkurve 22 vorbeigeführt, die bewirkt, dass die geöffnete Blasform geschlossen wird, wobei eine bewegliche der beiden Blasformhälften zu einer feststehenden Blasformhälfte geschwenkt wird. Die geschlossene Blasform wird auf dem Blasrad 8 weiter entlang der Verriegelungskurve 18 transportiert, die bewirkt, dass die geschlossenen Blasformhälften miteinander verriegelt werden.

Daneben bzw. gleichzeitig wird ein Blasformboden von unten an die miteinander zu verriegelnden Blasformhälften heran geführt und durch eine entsprechende Verriegelungsvorrichtung (nicht gezeigt) mit den beiden geschlossenen Blasformhälften verriegelt. Entlang des weiteren Verlaufs auf der durch das Blasrad geführten Kreisbahn kommt die verriegelte Blasform mit dem darin befindlichen Vorformling in den eigentlichen Blasformungsbereich. Dort wird ein Stutzen an eine obere Öffnung der Blasform und an die am Vorformling bereits ausgebildete Behälteröffnung abdichtend herangeführt, und anschließend wird der Vorformling durch Zufuhr von Druckluft in das Innere des Vorformlings aufgeweitet bis die Außenwand des Vorformlings an der Innenfläche der Blasform anstößt.

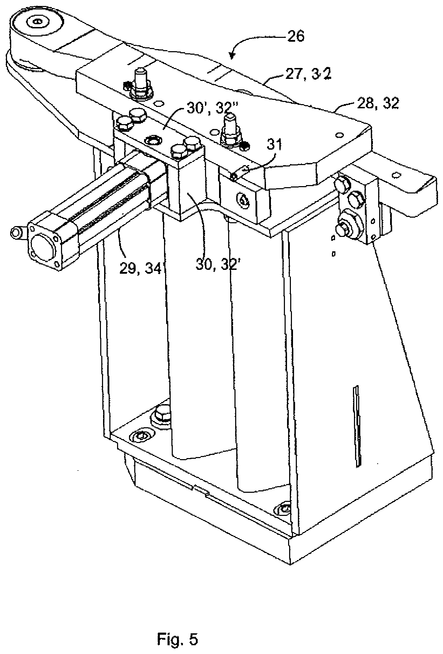

Dann läuft die Blasform mit dem darin ausgebildeten Behälter an der Entriegelungskurve 26 (vgl. Fig. 5) vorbei, die bewirkt, dass die Blasformhälften entriegelt werden. Anschließend läuft die entriegelte Blasform an dem Öffnungsbereich der Öffnungs-/Schließkurve 22 (Fig. 4) vorbei, was bewirkt, dass die Blasform geöffnet wird. Dann wird der geformte Behälter durch die nachfolgende Abführungsvorrichtung 12 aus der geöffneten Blasform entnommen und abgeführt.

Die Führungskurve 14, die Verriegelungskurve 18, die Vorrichtung zum Heben des Blasformbodens (nicht gezeigt), die Öffnungs-/Schließkurve 22 und die Entriegelungskurve 26 sind Beispiele von Bewegungsausführungsvorrichtungen. Zum Schutz und zum Erkennen von besonderen Belastungen, Verstellungen oder auch Beschädigungen in einem frühen Stadium sind an den Bewegungsausführungsvorrichtungen Schwingungssensoren in Schwingungskommunikation mit den im Betrieb zusammenspielenden geführten und führenden Komponenten der mechanischen Kurve angebracht, wie beispielsweise in den Figuren 2 bis 5 gezeigt. Die Schwingungssensoren wandeln eine mechanische Schwingung von zumindest einem Teilbereich der Bewegungsausführungsvorrichtung um in ein Schwingungsmesssignal, das zum Auswerten und basiert auf einem Ergebnis der Auswertung zum Detektieren von mechanischen Schwingungen der Bewegungsausführungsvorrichtung dient.

Fig. 2 zeigt die Reckkurve 14, die zum Führen den Blasform während der Blasformung des Behälters dient, und die in einem mittleren Bereich einen Schwingungssensor, den Führungskurvensensor 16, umfasst.

Fig. 3 zeigt die Verriegelungskurve 18, die das Verriegeln der Blasformhälften bewirkt. In der Nähe des Bereiches der Verriegelungskurve 18, an der zuerst mit einer Verstellung, hohen Belastung oder Beschädigungen beispielsweise durch hohen Andruck oder Schleifen an der Verriegelungskurve 18 zu rechnen ist, ist ebenfalls ein Schwingungssensor, der Verriegelungskurvensensor 20, angebracht.

Fig. 4 zeigt die Öffnungs-/Schließkurve 22, die das Öffnen und Schließen der Blasformhälften bewirkt und die eine die Bewegung auf der Kreisbahn transportierten Blasformhälften führende Furche, die in Fig. 4 besonders gut sichtbar ist, umfasst. Die Öffnungs-/Schließkurve 22 bzw. die Furche umfasst einen Bereich, der das Öffnen der Blasformen bewirkt und in dem ein Öffnungskurvensensor 24' und ein Schließkurvensensor 24 angeordnet ist.

Schließlich zeigt Fig. 5 die Entriegelungsvorrichtung 26 mit der um eine senkrecht ausgerichtete Drehachse schwenkbar angeordneten Entriegelungseingreifkurve 27, die nur im Fall einer Fehlorientierung eingreift und die auf Ihrer horizontalen Drehbewegung von einer Entriegelungskurve 28 geführt wird. An einer in Bezug auf das Blasrad äußeren bzw. entgegen gesetzten Seite der Entriegelungskurve 28 ist ein Entriegelungskurvensensor 31 angeordnet. Im Zusammenspiel der Entriegelungskurve 28 mit der Entriegelungseingreifkurve 27 ist die Entriegelungskurve 28 ein führendes Element 32, das die Schwenkbewegung der Entriegelungseingreifkurve 27 stabilisiert, und die Entriegelungseingreifkurve 27 ist damit ebenfalls ein führendes Element 32. Die Schwenkbewegung der Entriegelungskurve 28 wird durch eine in Bezug auf die Kreisbewegung des Blasrads 8 radial einwärts und auswärts bewegliche und in einer Bügelvorrichtung 30 gelagerte Aktivierungsschubstange 29 aktiviert.

In dem in Fig. 5 gezeigten Beispiel der Entriegelungsvorrichtung 26 ist der Entriegelungskurvensensor 31 in Schwingungskommunikation mit der Führungsplatte 28. An der schwenkbaren, beweglich gelagerten Entriegelungskurve 27 ist ebenfalls an einer in Bezug auf die Position des Blasrads 8 äußeren Seite ein Schwingungssensor (nicht gezeigt) angebracht. Dieser Sensor ist während der Perioden des Überführens in und des Zurückführens aus der aktivierten Position der Entriegelungskurve 27 in einem geführtem Element angeordnet.

Der Ausdruck "in Schwingungskommunikation angeordnet" bedeutet, dass durch die Führung des geführten Elements entlang eines führenden Elements in dieser Bewegungsausführungsvorrichtung erzeugte Schwingungen zu einem Schwingungsmesssensor übertragen werden.

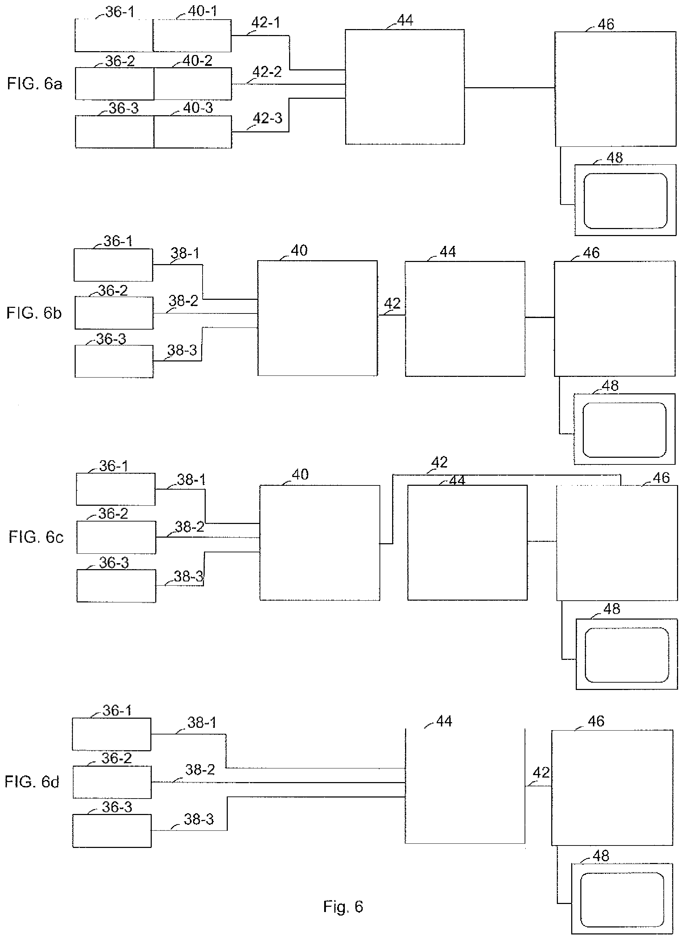

Fig. 6 stellt verschiedene Ausführungsformen für die Kopplung zwischen Schwingungssensoren und Auswertemitteln dar für ein System mit mehreren, beispielsweise drei, Schwingungssensoren 36-1, 36-2, 36-3 und diesen Schwingungssensoren jeweils zugeordneten Auswertemitteln 40-1, 40-2, 40-3, und ferner einer zentralen Auswerteeinheit 44, z.B. in Form einer speicherprogrammierbaren Steuerung SPS und einer nachgeschalteten Visualisierungseinheit 46. In der in Fig. 6a gezeigten Ausführungsform ist in jedem der Schwingungsmesssensoren 36-1, 36-2, 36-3 ein zugeordnetes Auswertemittel 40-1, 40-2, 40-3 im Sensor integriert. Die von den Auswertemitteln 40-1, 40-2, 40-3 erzeugten Informationssignale 42-1, 42-2, 42-3 werden einer zentralen Auswerteeinheit 44 zugeführt. Die der zentralen Auswerteeinheit 44 zugeführten Informationssignale 42-1, 42-2, 42-3 enthalten Informationen darüber, ob an der Bewegungsausführungsvorrichtung, mit der der entsprechende Schwingungssensor in Schwingungskommunikation angeordnet ist, eine besondere Belastung, eine Verstellung oder gar Beschädigung aufgetreten ist. Aus diesen in der zentralen Auswerteeinheit 44 eintreffenden Informationen erzeugt die zentrale Auswerteeinheit 44 Informationen darüber, wie auf die hohe Belastung, Verstellung oder Beschädigung zu reagieren ist, und führt diese Information der Visualisierungseinheit 46 zu. Die Information, wie auf die zu hohe Belastung, die Verstellung oder die Beschädigung zu reagieren ist, könnte beispielsweise sein: ein empfohlener Stopp der Maschine, die empfohlene Ausgabe eines Warnsignals oder die Ausgabe eines Hinweises, welche Bewegungsausführungsvorrichtung betroffen ist, usw.

Bei der in Fig. 6b gezeigten Ausführungsform werden die von mehreren, beispielsweise drei Schwingungsmesssensoren 36-1,36-2, 36-3 erzeugten Schwingungsmesssignale 38-1, 38-2, 38-3 direkt einem zentralen Auswertemittel 40 zugeführt. In dem Auswertemittel 40 erfolgt die Bewertung der von den einzelnen Schwingungsmesssensoren erzeugten Schwingungsmesssignale 38-1, 38-2, 38-3. Mit den Informationen aus den Bewertungen der einzelnen Schwingungsmesssignale erzeugt das zentrale Auswertemittel 40 Informationen, wie auf eine als zu hoch bewertete Belastung, auf eine Verstellung oder auf eine Beschädigung hinweisende Schwingungsmesssignalcharakteristik zu reagieren ist.

Bei der in Fig. 6a und Fig. 6b gezeigten Ausführungsform wird die Visualisierungseinheit 46 dahingehend entlastet, dass diese die häufig rechenintensive Bewertung der Schwingungsmesssignale in dem zentralen Auswerteeinheit 44 erfolgt und die Visualisierungseinheit 46 diese nicht auszuführen braucht.

Bei der in Fig. 6c gezeigten Ausführungsform werden Informationssignale 42 erzeugt und über eine Informationsleitung der Visualisierungseinheit 46 zugeführt, die daraus und aus von einer zentralen Vorrichtungssteuereinheit 44 eingeholten Informationen Hinweise bzw. die oben genannten Informationen zur Reaktion erzeugt.

Die zentrale Vorrichtungssteuereinheit 44 kann beispielsweise eine speicherprogrammierbare Steuerung (SPS), ein Industrierechner mit einer Soft-SPS und/oder einem Visualisierungsprogramm, eine firmen- oder gerätespezifische Steuerungslösung oder ein durch ein geeignetes Softwareprogramm gesteuerter Computer, z.B. ein Personal Computer (PC), sein. Im letzteren Fall ist das Anzeigemittel 48 ein an der Visualisierungseinheit 46, z.B. einem PC, angeschlossener Monitor.

Aufgrund der verfügbaren, immer leistungsfähigeren übergeordnete Vorrichtungssteuereinheiten 44 ist auch eine Ausführungsform denkbar, wie in Fig. 6d gezeigt. Dabei werden die einzelnen Schwingungsmesssensoren 36-1, ..., 36-3 direkt an die übergeordnete Vorrichtungssteuereinheit 44 angeschlossen, und die Auswertemittel 40 oder die zentralen Auswertemittel sind in der übergeordneten Vorrichtungssteuereinheit 44 integriert.

Die Visualisierungseinheit 46 mit dem Anzeigemittel 48 kann allgemein sowohl die von übergeordneten Vorrichtungssteuereinheit 44 aufbereitete Informationen, als auch die von den Auswertemitteln 40, 40-1, ..., 40-3 ausgegebenen, auf der Bewertung basierte Information 42 oder auch die direkt von den Schwingungssensoren 36-1, 36-2, 36,3 gemessenen Schwingungsmesssignale 38-1, 38-2, 38-3, beispielsweise tabellarisch oder in graphischer Form, darstellen.

Es ist vorteilhaft, wenn die Bewertung bzw. die Auswertung nicht nur die Überschreitung von bestimmten Grenzwerten meldet, sondern zusätzliche Informationen über deren Ursache liefert. Beispielsweise könnte die Bezeichnung einer betroffenen Bewegungsausführungsvorrichtung oder die Nummer von einer Bewegungsausführungsvorrichtung aus einer Vielzahl von gleichartigen Bewegungsausführungsvorrichtungen, beispielsweise die Nummer einer Blasform, angezeigt werden, die den Fehler verursacht hat. Dies vermeidet ein längeres Suchen der betroffenen Bewegungsausführungsvorrichtung durch das Bedienpersonal. Es ist auch denkbar, dass Maximalwerte, beispielsweise von Schwingungsmesssignalen, oder auch einstellbare Schwell- bzw. Grenzwerte oder historische Trends, beispielsweise Trends von direkt erfassten oder gefilterten Schwingungsmesssignalen oder von bewerteten Informationen, angezeigt werden, die es ermöglichen, eine hohe Belastung, eine Verstellung oder eine Beschädigung einer Bewegungsausführungsvorrichtung möglichst genau nachzuvollziehen.

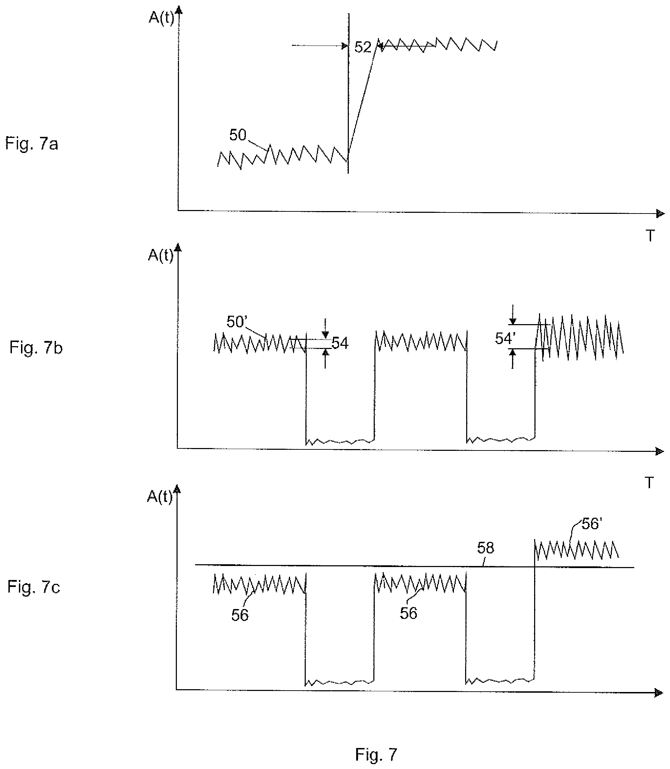

Die von den Schwingungssensoren gemessenen Schwingungsmesssignale werden allgemein bewertet bzw. ausgewertet, indem die Amplitude von Schwingungen mit einem oder mehreren einstellbaren Grenzwerten verglichen werden. Eine weitere Variante besteht darin, mehrere oder alle Frequenzen zu summieren, um damit beispielsweise einen Gesamtstoß zu berechnen. Die Fig. 7a bis 7d zeigen beispielhaft und schematisch verschiedene Ausführungsformen, wie ein Schwingungsmesssignal ausgewertet bzw. bewertet werden kann.

Fig. 7a zeigt die Zeitabhängigkeit der Amplitude eines Schwingungsmesssignals A(t), d.h. den Verlauf der Amplitude A(t) über der Zeit t, d.h. das Schwingungsmesssignal, so wie dies von einem Schwingungssensor erzeugt worden ist. Anfänglich erzeugt ein an einer mechanischen Kurve angebrachter Schwingungssensor ein bis auf ein Rauschen näherungsweise konstantes Schwingungsmesssignal 50. Zu einem bestimmten Zeitpunkt t1 verändert sich das Schwingungsmesssignal 50 rasch, wie in Fig. 7a gezeigt, und steigt schnell an, dadurch dass z.B. ein geführtes Element gerade in Kontakt mit der mechanischen Kurve getreten ist.

Wenn der maximale Andruck bzw. Kontakt des geführten Elements mit der mechanischen Kurve zustande gekommen ist, erreicht auch die Amplitude A(t) einen maximalen Wert auf einem erhöhten Niveau. Bei der Herstellung des Kontakts wird die Zeitdauer 52, Δt der Änderung der Amplitude A(t) bestimmt und mit einem Grenzwert verglichen. Über die Einstellung eines Grenzwerts für die Zeitdauer 52, Δt wird die Toleranz bzw. das tolerierte Spiel der Führung durch die mechanische Kurve eingestellt.

Fig. 7b zeigt den Zeitverlauf einer Amplitude A(t) eines an einer Bewegungsausführungsvorrichtung gemessenen Schwingungsmesssignals 50'. Dieser Zeitverlauf entsteht z.B. dadurch, dass wiederholt geführte Elemente an der betreffenden Bewegungsausführungsvorrichtung entlang laufen. Während eines schleifenden Kontakts des geführten Elements mit der mechanischen Kurve wird ein "Schleifgeräusch" in Form eines hochfrequenten Rauschens mit einer Rauschamplitude 54 von dem betroffenen Schwingungssensor gemessen. In dieser Situation lässt sich das tolerierbare Spiel bzw. das "Klappern" durch eine geeignete Wahl eines Grenzwerts für die Amplitude 54, N des Rauschens des "Schleifgeräuschs" des geführten Elements an der mechanischen Kurve einstellen.

Auch Fig. 7c zeigt den Zeitverlauf einer Schwingungssignalamplitude A(t), die von einem Schwingungssensor gemessen worden ist, der mit einer mechanischen Kurve in Schwingungskommunikation steht, an der wiederholt geführte Elemente entlang geführt werden. Bei richtig justierter mechanischer Kurve entsteht beim Kontakt des geführten Elements mit der mechanischen Kurve als führenden Element ein "Schleifgeräusch" auf einem bestimmten Wert 56. Wenn sich die Kurve im Laufe der Betriebszeit verstellt, nimmt die Amplitude des "Schleifgeräuschs" während des Kontakts des geführten Elements mit dem führenden Element auf einen Wert 56' zu. Fig. 7c zeigt einen Schwellwert 58 für die tolerierbare Stärke (Amplitude) des "Schleifgeräusches". Die betroffene mechanische Kurve wird als verstellt bewertet, wenn das "Schleifgeräusch" 56' über den Schwellwert 58 ansteigt, wie im rechten Teil der Fig. 7c gezeigt.

## Patentansprüche

1. Eine Behälterbehandlungsvorrichtung (1, 2) zur Behandlung von Behältern mit: mindestens einer Bewegungsausführungsvorrichtung (14, 18, 22, 26), wobei mindestens ein in Schwingungskommunikation mit der Bewegungsausführungsvorrichtung (14, 18, 22, 26) angeordneter Schwingungssensor (16, 20, 24, 31; 36) zum Umwandeln einer mechanischen Schwingung von zumindest einem Teilbereich der Bewegungsausführungsvorrichtung (14, 18, 22, 26) in ein Schwingungsmesssignal und zum Ausgeben des Schwingungsmesssignals sowie ein Auswertemittel (40) ausgebildet zum Auswerten von mindestens einem durch den Schwingungssensor (16, 20, 24, 31; 36) erzeugten Schwingungsmesssignal vorgesehen ist, wobei dies bedeutet, dass durch eine Führung eines geführten Elements entlang eines führenden Elements in dieser Bewegungsausführungsvorrichtung(14, 18, 22, 26) erzeugte Schwingungen zu dem Schwingungsmesssensor (16, 20, 24, 31; 36) übertragen werden, und weiter wobei durch diese Auswertung ein Zustand der Behälterbehandlungsvorrichtung überwachbar ist, **dadurch gekennzeichnet, dass**
die Bewegungsausführungsvorrichtung (14, 18, 22, 26) aus einer Gruppe von Vorrichtungen ausgewählt ist, welche eine Vorrichtung (14) zum Führen einer Blasform während der Blasformung eines Behälters, eine Vorrichtung (22) zum Öffnen und/oder Schließen einer Blasform, eine Vorrichtung (18) zum Verriegeln der Blasformhälften, eine Vorrichtung (26) zum Entriegeln der Blasformhälften, eine Vorrichtung zum Heben und Senken eines Blasformbodens, eine Vorrichtung zum Strecken eines Vorformlings, Kombinationen hieraus umfasst, und weiter wobei zum Schutz und zum Erkennen von besonderen Belastungen, Verstellungen oder auch Beschädigungen in einem frühen Stadium an der Bewegungsausführungsvorrichtung (14, 18, 22, 26) der Schwingungssensor in Schwingungskommunikation mit den im Betrieb zusammenspielenden geführten und führenden Elementen der Bewegungsausführungsvorrichtung (14, 18, 22, 26) ist und an einem der geführten oder führenden Elemente der Bewegungsausführungsvorrichtung (14, 18, 22, 26) angebracht ist.

2. Behälterbehandlungsvorrichtung nach Anspruch 1, **dadurch gekennzeichnet, dass** das Auswertemittel (40) dazu ausgebildet ist, basiert auf einem Ergebnis des Auswertens des Schwingungsmesssignals, zu erkennen, ob ein Wartungsbedarf besteht, ob eine mechanische Verstellung, ein Schaden und/oder eine zu hohe Belastung an einer mechanischen Komponente der Bewegungsausführungsvorrichtung (14, 18, 22, 26) aufgetreten ist.

3. Behälterbehandlungsvorrichtung nach einem der Ansprüche 1 bis 2, **dadurch gekennzeichnet, dass** die Bewegungsausführungsvorrichtung (26) eine führende Komponente (32, 32') und eine geführte Komponente (34, 34') umfasst.

4. Behälterbehandlungsvorrichtung nach einem der vorhergehenden Ansprüche, **dadurch gekennzeichnet, dass** das Auswertemittel (40, 40-1, 40-2, 40-3) dazu ausgebildet ist, zu erkennen, wenn, basiert auf der Auswertung des Schwingungsmesssignals (38-1, 38-2, 38-3) ein Bedarf zum Eingreifen durch einen Bediener in den laufenden Betrieb der Behälterbehandlungsvorrichtung (1, 2) detektiert wird.

5. Behälterbehandlungsvorrichtung nach einem der vorhergehenden Ansprüche, **dadurch gekennzeichnet, dass** ein Anzeigemittel (48) zum Ausgeben abgeleiteter numerischer Werte bezüglich des Schwingungsmesssignals (38-1, 38-2, 38-3) oder einer grafischen Darstellung des Schwingungsmesssignals oder von Ergebnissen (42-1, 42-2, 42-3) der Auswertung vorgesehen ist.

6. Behälterbehandlungsvorrichtung nach einem der Ansprüche 1 bis 5 **dadurch gekennzeichnet, dass** das Auswertemittel (40-1, 40-2, 40-3) in einem Schwingungssensor (36-1, 36-2, 36-3) integriert angeordnet ist.

7. Behälterbehandlungsvorrichtung nach einem der Ansprüche 1 bis 6, **dadurch gekennzeichnet, dass** eine zentrale Auswerteeinheit (44) vorgesehen ist, der die Schwingungsmesssignale (38-1, 38-2, 38-3) von einem oder mehreren Schwingungssensoren (36-1, 36-2, 36-3) zuführbar sind.

8. Verfahren zum Überwachen der Betriebsfähigkeit einer Behälterbehandlungsvorrichtung (1, 2) mit mindestens einer Bewegungsausführungsvorrichtung (14, 18, 22, 26) und mindestens einem in Schwingungskommunikation mit der Bewegungsausführungsvorrichtung angeordneten Schwingungssensor (16, 20, 24, 31; 36-1, 36-2, 36-3), das Verfahren umfassend die folgenden Schritte:
(a) Erfassen von mindestens einem von mindestens einem Schwingungssensor (16, 20, 24, 31; 36-1, 36-2, 36-3) ausgegebenen Schwingungsmesssignal (38-1, 38-2, 38-3; 50, 50', 50")
und
(b) Auswerten des mindestens einen Schwingungsmesssignals (38-1, 38-2, 38-3; 50, 50', 50"),
**dadurch gekennzeichnet, dass**
durch diese Auswertung ein Zustand der Behälterbehandlungsvorrichtung mittels der Schwingungsanalyse überwacht wird, und wobei die Bewegungsausführungsvorrichtung (14, 18, 22, 26) aus einer Gruppe von Vorrichtungen ausgewählt ist, welche eine Vorrichtung (14) zum Führen einer Blasform während der Blasformung eines Behälters, eine Vorrichtung (22) zum Öffnen und/oder Schließen einer Blasform, eine Vorrichtung (18) zum Verriegeln der Blasformhälften, eine Vorrichtung (26) zum Entriegeln der Blasformhälften, eine Vorrichtung zum Heben und Senken eines Blasformbodens, eine Vorrichtung zum Strecken eines Vorformlings, Kombinationen hieraus umfasst, und weiter wobei zum Schutz und zum Erkennen von besonderen Belastungen, Verstellungen oder auch Beschädigungen in einem frühen Stadium an der Bewegungsausführungsvorrichtung (14, 18, 22, 26) der Schwingungssensor in Schwingungskommunikation mit den im Betrieb zusammenspielenden geführten und führenden Elementen der Bewegungsausführungsvorrichtung (14, 18, 22, 26) ist und an einem der geführten oder führenden Elemente der Bewegungsausführungsvorrichtung (14, 18, 22, 26) angebracht ist.

9. Verfahren nach Anspruch 8, **dadurch gekennzeichnet, dass** Schritt (b) umfasst: Vergleichen des Schwingungsmesssignals (38-1, 38-2, 38-3; 50, 50', 50") bzw. daraus abgeleiteter Größen (52; 54, 54') mit Normsignalen bzw. Normgrößen und Feststellen, ob Abweichungen außerhalb eines einstellbaren Toleranzbereichs um das Normsignal bzw. die Normgröße auftreten.

10. Verfahren nach Anspruch 8 oder 9, ferner **gekennzeichnet durch** einen Schritt (c), dass basiert auf der Auswertung des Schwingungsmesssignals (38-1, 38-2, 38-3; 50, 50', 50") eine Information ausgegeben wird, dass ein Bedarf zum Eingreifen durch einen Bediener in einen laufenden Betrieb der Behälterbehandlungsvorrichtung besteht.

11. Verfahren nach einem der vorhergehenden Ansprüche 8 bis 10, **dadurch gekennzeichnet, dass** Schritt (c) umfasst: Erzeugen eines Warnsignals oder eines Signals, das die Stilllegung der Behälterbehandlungsvorrichtung bewirkt.

12. Verfahren nach einem der vorhergehenden Ansprüche 8 bis 11, **dadurch gekennzeichnet, dass** Schritt (c) umfasst: Vergleichen eines für die Amplitude einer Schwingung von zumindest einem Teil der Bewegungsausführungsvorrichtung repräsentativen Signals bzw. einer daraus abgeleiteten Größe mit einem oder mehreren einstellbaren Grenzsignal bzw. einer Grenzgröße zu vergleichen.

13. Verfahren nach einem der vorhergehenden Ansprüche 8 bis 12, **dadurch gekennzeichnet, dass** Schritt (c) umfasst: Zerlegen des Schwingungsmesssignals in Frequenzbestandteile und Bewerten von Frequenzbestandteilen in geeignet ausgewählten Frequenzbändern.

14. Behälterbehandlungsvorrichtung (1, 2) nach einem der Ansprüche 1 bis 7 **dadurch gekennzeichnet, dass** die Auswertemittel (40, 40-1, 40-2, 40-3) ausgebildet sind zum Ausführen des Verfahrensschritts (b) aus Anspruch 9 und/oder einem der in den Ansprüchen 10 bis 14 genannten Verfahrensschritte.

## Claims

1. A container treatment apparatus (1, 2) for treating containers, comprising:
at least one movement implementing device (14, 18, 22, 26), wherein at least one vibration sensor (16, 20, 24, 31; 36) in vibratory communication with the movement implementing device (14, 18, 22, 26) is provided for converting a mechanical vibration of at least one sub-region of the movement implementing device (14, 18, 22, 26) into a vibration measurement signal and for outputting the vibration measurement signal, and also an evaluation means (40) is provided which is designed to evaluate at least one vibration measurement signal produced by the vibration sensor (16, 20, 24, 31; 36), wherein this means that vibrations produced in this movement implementing device (14, 18, 22, 26) by the guidance of a guided element along a guiding element are transmitted to the vibration measurement sensor (16, 20, 24, 31, 36), and further wherein by means of this evaluation a state of the container treatment apparatus is controllable,
**characterised in that**
the movement implementing device (14, 18, 22, 26) is selected from a group of devices comprising a device (14) for guiding a blow mould during the blow-moulding of a container, a device (22) for opening and/or closing a blow mould, a device (18) for locking the blow mould halves, a device (26) for unlocking the blow mould halves, a device for raising and lowering a blow mould bottom, a device for stretching a preform, combinations thereof, and further wherein for protection and early detection of a special high load, displacement, or even damage on the movement implementing device (14, 18, 22, 26) is the vibration sensor in vibratory communication with guided and guiding elements, which interact with one another during operation, of the movement implementing device (14, 18, 22, 26) and is attached to one of the guided or guiding elements of the movement implementing device (14, 18, 22, 26).

2. Container treatment apparatus according to claim 1, **characterised in that** the evaluation means (40) is designed to detect, based on a result of the evaluation of the vibration measurement signal, whether there is a need for maintenance or whether a mechanical displacement, damage and/or an excessively high load has occurred on a mechanical component of the movement implementing device (14, 18, 22, 26).

3. Container treatment apparatus according to one of claim 1 to 2, **characterised in that** that the movement implementing device (26) comprises a guiding component (32, 32') and a guided component (34, 34').

4. Container treatment apparatus according to one of the preceding claims, **characterised in that** the evaluation means (40, 40-1, 40-2, 40-3) is designed to detect when, based on the evaluation of the vibration measurement signal (38-1, 38-2, 38-3), a need for intervention by an operator in the ongoing operation of the container treatment apparatus (1, 2) is detected.

5. Container treatment apparatus according to one of the preceding claims, **characterised in that** a display means (48) is provided for outputting derived numerical values relating to the vibration measurement signal (38-1, 38-2, 38-3) or a graphical display of the vibration measurement signal or results (42-1, 42-2, 42-3) of the evaluation.

6. Container treatment apparatus according to one of the claims 1 to 5, **characterised in that** the evaluation means (40-1, 40-2, 40-3) is integrated in a vibration sensor (36-1, 36-2, 36-3).

7. Container treatment apparatus according to one of the claims 1 to 6, **characterised in that** a central evaluation unit (44) is provided which can be fed the vibration measurement signals (38-1, 38-2, 38-3) from one or more vibration sensors (36-1, 36-2, 36-3).

8. Method for monitoring the operational capability of a container treatment apparatus (1, 2) comprising at least one movement implementing device (14, 18, 22, 26) and at least one vibration sensor (16, 20, 24, 31; 36-1, 36-2, 36-3) in vibratory communication with the movement implementing device, the method comprising the following steps:
(a) detecting at least one vibration measurement signal (38-1, 38-2, 38-3; 50, 50', 50") output by at least one vibration sensor (16, 20, 24, 31; 36-1, 36-2, 36-3),
and
(b) evaluating the at least one vibration measurement signal (38-1, 38-2, 38-3; 50, 50', 50"),
**characterised in that**
by means of this evaluation a state of the container treatment apparatus is controllable by means of the vibration analysis, and wherein the movement implementing device (14, 18, 22, 26) is selected from a group of devices comprising a device (14) for guiding a blow mould during the blow-moulding of a container, a device (22) for opening and/or closing a blow mould, a device (18) for locking the blow mould halves, a device (26) for unlocking the blow mould halves, a device for raising and lowering a blow mould bottom, a device for stretching a preform, combinations thereof, and further wherein for protection and early detection of a special high load, displacement, or even damage on the movement implementing device (14, 18, 22, 26) is the vibration sensor in vibratory communication with guided and guiding elements, which interact with one another during operation, of the movement implementing device (14, 18, 22, 26) and is attached to one of the guided or guiding elements of the movement implementing device (14, 18, 22, 26).

9. Method according to claim 8, **characterised in that** step (b) comprises: comparing the vibration measurement signal (38-1, 38-2, 38-3; 50, 50', 50") or variables (52; 54, 54') derived therefrom with standard signals or standard variables, and ascertaining whether deviations occur outside a settable tolerance range around the standard signal or the standard variable.

10. Method according to claim 8 or 9, furthermore **characterised by** a step (c) in which, based on the evaluation of the vibration measurement signal (38-1, 38-2, 38-3; 50, 50', 50"), information is output to the effect that there is a need for intervention by an operator in the ongoing operation of the container treatment apparatus.

11. Method according to one of the preceding claims 8 to 10, **characterised in that** step (c) comprises: producing a warning signal or a signal which causes the container treatment apparatus to stop.

12. Method according to one of the preceding claims 8 to 11, **characterised in that** step (c) comprises: comparing a signal representative of the amplitude of a vibration of at least part of the movement implementing device, or a variable derived therefrom, with one or more settable limit signals or a limit variable.

13. Method according to one of the preceding claims 8 to 12, **characterised in that** step (c) comprises: breaking down the vibration measurement signal into frequency components, and evaluating frequency components in suitably selected frequency bands.

14. Container treatment apparatus (1, 2) according to one of claims 1 to 7, **characterised in that** the evaluation means (40, 40-1, 40-2, 40-3) are designed to carry out method step (b) from claim 9 and/or one of the method steps specified in claims 10 to 14.

## Revendications

1. Dispositif de traitement de récipient (1, 2) pour traiter des récipients avec : au moins un dispositif d'exécution de mouvement (14, 18, 22, 26), dans lequel au moins un capteur de vibration (16, 20, 24, 31 ; 36) disposé en communication de vibration avec le dispositif d'exécution de mouvement (14, 18, 22, 26) pour convertir une vibration mécanique provenant d'au moins une zone partielle du dispositif d'exécution de mouvement (14, 18, 22, 26) en un signal de mesure de vibration et pour délivrer le signal de mesure de vibration ainsi qu'un moyen d'évaluation (40) réalisé pour évaluer au moins un signal de mesure de vibration généré par le capteur de vibration (16, 20, 24, 31 ; 36) est prévu, dans lequel cela signifie que les vibrations générées par un guidage d'un élément guidé le long d'un élément guidant dans ce dispositif d'exécution de mouvement (14, 18, 22, 26) sont transmises au capteur de mesure de vibration (16, 20, 24, 31 ; 36), et en outre dans lequel un état du dispositif de traitement de récipient peut être surveillé par cette évaluation,
**caractérisé en ce que**
le dispositif d'exécution de mouvement (14, 18, 22, 26) est choisi dans un groupe de dispositifs, lequel comprend un dispositif (14) pour guider un moule de soufflage pendant le moulage par soufflage d'un récipient, un dispositif (22) pour ouvrir et/ou fermer un moule de soufflage, un dispositif (18) pour verrouiller les moitiés de moule de soufflage, un dispositif (26) pour déverrouiller les moitiés de moule de soufflage, un dispositif pour lever et baisser un fond de moule de soufflage, un dispositif pour étirer une préforme, des combinaisons de ceux-ci, et en outre dans lequel pour protéger et pour déceler des sollicitations, décalages ou bien dommages particuliers à un stade précoce sur le dispositif d'exécution de mouvement (14, 18, 22, 26), le capteur de vibration est en communication de vibration avec les éléments guidés et guidants du dispositif d'exécution de mouvement (14, 18, 22, 26) interagissant lors du fonctionnement et est monté sur un des éléments guidés ou guidants du dispositif d'exécution de mouvement (14, 18, 22, 26).

2. Dispositif de traitement de récipient selon la revendication 1, **caractérisé en ce que** le moyen d'évaluation (40) est réalisé pour déceler, sur la base d'un résultat de l'évaluation du signal de mesure de vibration, s'il existe un besoin de maintenance, si un décalage mécanique, un dommage et/ou une sollicitation trop élevée s'est produit(e) sur un composant mécanique du dispositif d'exécution de mouvement (14, 18, 22, 26).

3. Dispositif de traitement de récipient selon l'une quelconque des revendications 1 à 2, **caractérisé en ce que** le dispositif d'exécution de mouvement (26) comprend un composant guidant (32, 32') et un composant guidé (34, 34').

4. Dispositif de traitement de récipient selon l'une quelconque des revendications précédentes, **caractérisé en ce que** le moyen d'évaluation (40, 40-1, 40-2, 40-3) est réalisé pour déceler si, sur la base de l'évaluation du signal de mesure de vibration (38-1, 38-2, 38-3), un besoin d'intervention par un utilisateur pendant le fonctionnement en cours du dispositif de traitement de récipient (1, 2) est détecté.

5. Dispositif de traitement de récipient selon l'une quelconque des revendications précédentes, **caractérisé en ce qu'**un moyen d'affichage (48) pour délivrer des valeurs numériques déduites en ce qui concerne le signal de mesure de vibration (38-1, 38-2, 38-3) ou une représentation graphique du signal de mesure de vibration ou des résultats (42-1, 42-2, 42-3) de l'évaluation est prévu.

6. Dispositif de traitement de récipient selon l'une quelconque des revendications 1 à 5, **caractérisé en ce que** le moyen d'évaluation (40-1, 40-2, 40-3) est disposé de manière intégrée dans un capteur de vibration (36-1, 36-2, 36-3).

7. Dispositif de traitement de récipient selon l'une quelconque des revendications 1 à 6, **caractérisé en ce qu'**une unité d'évaluation centrale (44) est prévue, à laquelle peuvent être amenés les signaux de mesure de vibration (38-1, 38-2, 38-3) provenant d'un ou plusieurs capteurs de vibration (36-1, 36-2, 36-3).

8. Procédé pour surveiller l'état de marche d'un dispositif de traitement de récipient (1, 2) avec au moins un dispositif d'exécution de mouvement (14, 18, 22, 26) et au moins un capteur de vibration (16, 20, 24, 31 ; 36-1, 36-2, 36-3) disposé en communication de vibration avec le dispositif d'exécution de mouvement, le procédé comprenant les étapes suivantes :
(a) l'acquisition d'au moins un signal de mesure de vibration (38-1, 38-2, 38-3 ; 50, 50', 50") délivré par au moins un capteur de vibration (16, 20, 24, 31 ; 36-1, 36-2, 36-3)
et
(b) l'évaluation du au moins un signal de mesure de vibration (38-1, 38-2, 38-3 ; 50, 50', 50"),
**caractérisé en ce que**
un état du dispositif de traitement de récipient est surveillé par cette évaluation au moyen de l'analyse de vibration, et dans lequel le dispositif d'exécution de mouvement (14, 18, 22, 26) est choisi dans un groupe de dispositifs, lequel comprend un dispositif (14) pour guider un moule de soufflage pendant le moulage par soufflage d'un récipient, un dispositif (22) pour ouvrir et/ou fermer un moule de soufflage, un dispositif (18) pour verrouiller les moitiés de moule de soufflage, un dispositif (26) pour déverrouiller les moitiés de moule de soufflage, un dispositif pour lever et baisser un fond de moule de soufflage, un dispositif pour étirer une préforme, des combinaisons de ceux-ci, et en outre dans lequel pour protéger et pour déceler des sollicitations, décalages ou bien dommages particuliers à un stade précoce sur le dispositif d'exécution de mouvement (14, 18, 22, 26), le capteur de vibration est en communication de vibration avec les éléments guidés et guidants du dispositif d'exécution de mouvement (14, 18, 22, 26) interagissant lors du fonctionnement et est monté sur un des éléments guidés ou guidants du dispositif d'exécution de mouvement (14, 18, 22, 26).

9. Procédé selon la revendication 8, **caractérisé en ce que** l'étape (b) comprend : la comparaison du signal de mesure de vibration (38-1, 38-2, 38-3 ; 50, 50', 50") ou des grandeurs (52 ; 54, 54') déduites de celui-ci à des signaux normaux ou grandeurs normales et le fait de constater si des écarts à l'extérieur d'une plage de tolérances ajustables du signal normal ou de la grandeur normale se produisent.

10. Procédé selon la revendication 8 ou 9, **caractérisé en outre par** une étape (c), en ce que sur la base de l'évaluation du signal de mesure de vibration (38-1, 38-2, 38-3 ; 50, 50', 50"), une information est délivrée, qu'il existe un besoin d'intervention par un utilisateur pendant un fonctionnement en cours du dispositif de traitement de récipient.

11. Procédé selon l'une quelconque des revendications précédentes 8 à 10, **caractérisé en ce que** l'étape (c) comprend : la génération d'un signal d'avertissement ou d'un signal qui provoque la mise à l'arrêt du dispositif de traitement de récipient.

12. Procédé selon l'une quelconque des revendications précédentes 8 à 11, **caractérisé en ce que** l'étape (c) comprend : la comparaison d'un signal représentatif de l'amplitude d'une vibration d'au moins une partie du dispositif d'exécution de mouvement ou d'une grandeur déduite de celui-ci à un ou plusieurs signaux limites ajustables ou à une grandeur limite.

13. Procédé selon l'une quelconque des revendications précédentes 8 à 12, **caractérisé en ce que** l'étape (c) comprend : la décomposition du signal de mesure de vibration en composants de fréquence et l'évaluation de composants de fréquence dans des bandes de fréquence choisies de manière adaptée.

14. Dispositif de traitement de récipient (1, 2) selon l'une quelconque des revendications 1 à 7, **caractérisé en ce que** les moyens d'évaluation (40, 40-1, 40-2, 40-3) sont réalisés pour exécuter l'étape de procédé (b) de la revendication 9 et/ou une des étapes de procédé citées dans les revendications 10 à 14.
